(19) Europäisches Patentamt
European Patent Office
Office européen des brevets

(11) **EP 3 826 099 A1**

(12) **DEMANDE DE BREVET EUROPEEN**

(43) Date de publication:
**26.05.2021 Bulletin 2021/21**

(21) Numéro de dépôt: **20208696.3**

(22) Date de dépôt: **19.11.2020**

(51) Int Cl.:
*H01M 10/44* (2006.01)    *H01M 50/342* (2021.01)
*H01M 50/572* (2021.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
**KH MA MD TN**

(30) Priorité: **22.11.2019 FR 1913090**

(71) Demandeur: **Commissariat à l'Energie Atomique et aux Energies Alternatives**
**75015 Paris (FR)**

(72) Inventeurs:
• DUMENIL, Sébastien
  38054 GRENOBLE CEDEX 09 (FR)
• LONARDONI, Loic
  38054 GRENOBLE CEDEX 09 (FR)
• TESSARD, Romain
  38054 GRENOBLE CEDEX 09 (FR)

(74) Mandataire: **Cabinet Camus Lebkiri**
**25 rue de Maubeuge**
**75009 Paris (FR)**

(54) **DISPOSITIF DE MISE EN SÉCURITÉ D'UNE CELLULE ÉLECTROCHIMIQUE DE BATTERIE ET CELLULE ÉLECTROCHIMIQUE COMPORTANT UN TEL DISPOSITIF DE MISE EN SÉCURITÉ**

(57) Un aspect de l'invention concerne un dispositif de mise en sécurité (100) d'une cellule électrochimique (110) de batterie, comportant un évent de surpression (130) logé entre un capot de fermeture (120) et une électrode supérieure (111) de la cellule électrochimique et assurant une évacuation de gaz en cas de dysfonctionnement de ladite cellule électrochimique, et comportant en outre :
- - un dispositif bilame (140) apte à s'activer lorsqu'une température interne atteint une température seuil prédéfinie, et
- - une résistance de sécurité (150), positionnée entre le dispositif bilame et l'électrode supérieure de la cellule électrochimique,
le dispositif bilame (140) étant positionné entre l'évent de surpression (130) et la résistance de sécurité (150) de sorte à être connecté à l'évent de surpression lorsque la température interne est inférieure à la température seuil et à se connecter à la résistance de sécurité lorsque la température interne atteint la température seuil.

Fig. 4

EP 3 826 099 A1

**Description**

**DOMAINE TECHNIQUE DE L'INVENTION**

La présente invention concerne un dispositif de mise en sécurité d'une cellule électrochimique de batterie, et notamment de batterie de type métal-ion. Elle concerne également une cellule électrochimique équipée d'un tel dispositif de mise en sécurité ainsi qu'une batterie de type métal-ion comportant plusieurs de ces cellules électrochimiques.
L'invention trouve des applications dans le domaine des batteries ou accumulateurs d'énergie électrique. Elle trouve, en particulier, des applications dans le domaine des batteries de type métal-ion et notamment Lithium-ion.

**ARRIERE-PLAN TECHNOLOGIQUE DE L'INVENTION**

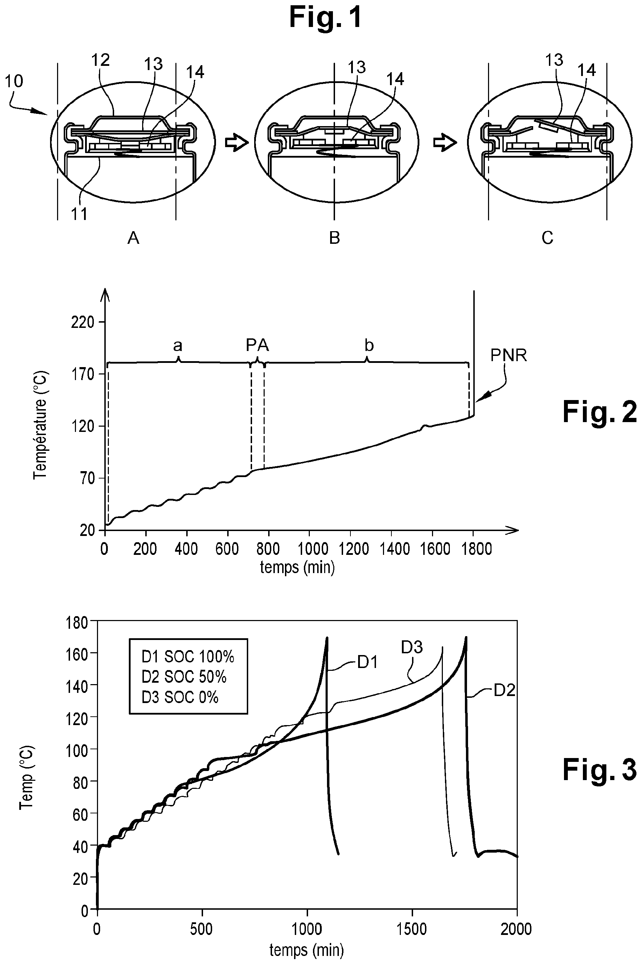

Une batterie est un appareil qui stocke et accumule de l'énergie électrique afin de la restituer ultérieurement. Une batterie comporte généralement plusieurs accumulateurs d'énergie électrique, appelés aussi modules, couplés pour offrir une plus grande réserve d'énergie. Chaque accumulateur, ou module, comporte plusieurs cellules électrochimiques comportant chacune une électrode à pôle positif (appelée cathode) et une électrode à pôle négatif (appelée anode), toutes deux plongées dans une solution, appelée électrolyte, faisant office de conducteur.
Il existe différents types de cellules électrochimiques métal-ion qui dépendent généralement des métaux choisis pour les électrodes et de la solution choisie comme électrolyte, comme par exemple, les batteries Lithium-ion. Ces cellules électrochimiques métal-ion ont l'avantage de présenter de faibles risques chimiques pour l'environnement. Toutefois, elles comportent un électrolyte liquide à base de solvant volatile, inflammable, qui pose des problèmes de sécurité. En effet, en cas de dysfonctionnement, comme par exemple un court-circuit ou une surcharge, la cellule électrochimique libère une grande quantité d'énergie ayant pour conséquence un échauffement, une inflammation voire une explosion de ladite cellule électrochimique.
Actuellement en cas de dysfonctionnement, la cellule électrochimique est isolée électriquement des autres cellules électrochimiques de la batterie et de son environnement au moyen d'un dispositif de sécurité passif intégré à la borne positive de la cellule électrochimique. Ce dispositif de sécurité passif comporte un dispositif interrupteur interne, appelé CID (Current Interrupt Device, en termes anglo-saxons), associé à un évent de surpression (ou venting, en termes anglo-saxons), tous deux positionnés entre le capot de fermeture et l'électrode positive de la cellule électrochimique. Un exemple d'un tel dispositif interrupteur interne est représenté sur la figure 1. Plus précisément, un exemple de dispositif interrupteur classiquement utilisé dans les cellules électrochimiques métal-ion est représenté, en partie A, dans son mode normal, en partie B, dans son mode de déconnexion et, en partie C, dans son mode déconnecté. En mode normal (partie A), c'est-à-dire lorsque la cellule électrochimique 10 fonctionne normalement, le dispositif interrupteur 14 est positionné de façon sensiblement rectiligne au-dessus de l'électrode positive 11 de la cellule électrochimique ; l'évent de surpression 13 est positionné sensiblement parallèle au dispositif interrupteur 14, entre le capot de fermeture 12 et ledit dispositif interrupteur 14. En cas de dysfonctionnement de la cellule électrochimique, lorsque la vaporisation commence dans la cellule électrochimique (partie B), c'est-à-dire que le gaz commence à se former, le dispositif interrupteur 14 se déforme sous l'effet de la pression jusqu'à se rompre. La pression augmentant, l'effort sur l'évent 13 entraîne une déformation dudit évent qui finit par se rompre (partie C), permettant de libérer le gaz généré lors de la vaporisation.
Toutefois, même déconnectée, la cellule électrochimique 10 reste dangereuse lorsque son état de charge est élevé, et particulièrement lorsqu'elle est en état de surcharge, car elle peut à tout moment exploser. La cellule électrochimique étant déconnectée de son environnement par le dispositif interrupteur 14, il n'est alors plus possible de la décharger pour limiter les risques d'explosion.
Un autre dispositif de sécurité est décrit dans le document CN105895835. Ce dispositif de sécurité propose de mesurer la température à l'intérieur d'une cellule électrochimique et, quand une surchauffe est détectée, de répandre un liquide qui vient court-circuiter ladite cellule électrochimique. Cependant, ce dispositif nécessite une carte électronique, ce qui entraîne un coût non négligeable, et un stockage de liquide, ce qui entraîne des risques de corrosion et de fuites. En outre, si la température du liquide de ce dispositif augmente, le liquide peut se vaporiser, ce qui entrainera une augmentation de la pression.
Il existe donc un réel besoin d'un dispositif de mise en sécurité des cellules électrochimiques de batteries métal-ion permettant de diminuer la charge desdites cellules afin d'éviter les risques d'explosion.

**RESUME DE L'INVENTION**

Pour répondre aux problèmes évoqués ci-dessus des conséquences d'un dysfonctionnement d'une cellule électrochimique métal-ion, le demandeur propose un dispositif de mise en sécurité de la cellule électrochimique par décharge dans une résistance de sécurité, lors de la déconnexion de ladite cellule.

EP 3 826 099 A1

Selon un premier aspect, l'invention concerne un dispositif de mise en sécurité d'une cellule électrochimique de batterie, comportant un évent de surpression logé entre un capot de fermeture et une électrode supérieure de la cellule électrochimique et assurant une évacuation de gaz en cas de dysfonctionnement de ladite cellule électrochimique, caractérisé en ce qu'il comporte en outre :

- un dispositif bilame apte à s'activer lorsqu'une température interne atteint une température seuil prédéfinie, et
- une résistance de sécurité, positionnée entre le dispositif bilame et l'électrode supérieure de la cellule électrochimique,

le dispositif bilame étant positionné entre l'évent de surpression et la résistance de sécurité de sorte à être connecté à l'évent de surpression lorsque la température interne est inférieure à la température seuil et à se connecter à la résistance de sécurité lorsque la température interne atteint la température seuil.

Ce dispositif de mise en sécurité, monté dans chacune des cellules électrochimiques d'une batterie, permet, en cas de dysfonctionnement, de diminuer la charge contenue dans la cellule afin d'éviter que celle-ci n'explose ou ne s'enflamme. Une fois la cellule électrochimique déchargée, la cellule électrochimique et donc la batterie ne sont plus dangereuses.

Avantageusement, le dispositif de mise en sécurité comporte un premier élément isolant monté entre le dispositif bilame et l'évent de surpression et un deuxième élément isolant monté entre le dispositif bilame et la résistance de sécurité, chacun des éléments isolants comportant un orifice en regard d'une zone de déformation du dispositif bilame.

Outre les caractéristiques qui viennent d'être évoquées dans le paragraphe précédent, le dispositif de mise en sécurité selon un aspect de l'invention peut présenter une ou plusieurs caractéristiques complémentaires parmi les suivantes, considérées individuellement ou selon toutes les combinaisons techniquement possibles :

- il comporte un troisième élément isolant monté entre l'électrode supérieure de la cellule électrochimique et la résistance de sécurité.
- le dispositif bilame, la résistance de sécurité et les éléments isolants comportent des dimensions extérieures similaires et sont empilés les uns sur les autres entre le capot de fermeture et l'électrode supérieure de la cellule électrochimique.
- le dispositif bilame comporte deux lames de matériaux à coefficients de dilatation différents, en contact avec une feuille de tôle présentant une forme bombée.
- Il comporte une liaison électrique connectant l'électrode supérieure de la cellule électrochimique avec le capot de fermeture par l'intermédiaire du dispositif bilame et de l'évent de surpression.
- chacun des deuxième et troisième éléments isolants comportent une lumière traversée par la liaison électrique.
- la température seuil est définie en fonction d'une température d'activation de la cellule électrochimique, cette température d'activation étant la température à laquelle la cellule électrochimique passe en mode exotherme.
- la température seuil est définie comme étant la température d'activation de la cellule électrochimique augmentée de 10 à 30°C.
- une valeur de la résistance de sécurité est définie par la formule R=Ucharge/[(C/2)*k], où Ucharge est la tension électrique maximale de la cellule électrochimique, C est la capacité de la cellule électrochimique et k est un coefficient prédéfini dépendant du type de batterie.
- la cellule électrochimique est de type cylindrique, caractérisé en ce que le dispositif bilame est de forme circulaire avec une zone de déformation centrale.
- la résistance de sécurité est un disque en céramique recouvert d'un alliage chrome nickel et fer.

Un deuxième aspect de l'invention concerne une cellule électrochimique de batterie, caractérisée en ce qu'elle comporte un dispositif de mise en sécurité tel que défini ci-dessus.

Un troisième aspect de l'invention concerne une batterie métal-ion comportant une pluralité de cellules électrochimiques, chaque cellule électrochimique comportant un dispositif de mise en sécurité tel que défini ci-dessus.

## BREVE DESCRIPTION DES FIGURES

D'autres avantages et caractéristiques de l'invention apparaîtront à la lecture de la description qui suit, illustrée par les figures dans lesquelles :

La figure 1, déjà décrite, représente une vue schématique en coupe d'un dispositif de sécurité passif selon l'art antérieur ;
La figure 2 représente un exemple de courbe d'évolution de la température au sein d'une cellule électrochimique ;
La figure 3 représente des exemples de courbes de températures pour des cellules identiques mais avec des niveaux de charge différents.;

La figure 4 représente un exemple de dispositif de mise en sécurité selon l'invention, adapté pour des cellules électrochimiques de batterie métal-ion ;

La figure 5 représente, dans un tableau, des exemples de données utilisées pour déterminer la valeur de la résistance de sécurité ;

La figure 6 représente des exemples de schémas électriques correspondant au fonctionnement d'une cellule en mode normal et en présence d'un dysfonctionnement ;

La figure 7 représente des exemples de courbes issues d'une expérimentation et montrant la température d'une cellule électrochimique lithium-ion en fonctionnement normal ;

La figure 8 représente des exemples de courbes issues d'une expérimentation et montrant la température d'une cellule électrochimique lithium-ion en cas de dysfonctionnement sans dispositif de mise en sécurité ; et

La figure 9 représente des exemples de courbes issues d'une expérimentation et montrant la température d'une cellule électrochimique lithium-ion avec un dispositif de mise en sécurité.

**DESCRIPTION DETAILLEE**

Un exemple de réalisation d'un dispositif de mise en sécurité d'une cellule électrochimique de batterie est décrit en détail ci-après, en référence aux dessins annexés. Cet exemple illustre les caractéristiques et avantages de l'invention. Il est toutefois rappelé que l'invention ne se limite pas à cet exemple.

Sur les figures, les éléments identiques sont repérés par des références identiques. Pour des questions de lisibilité des figures, les échelles de taille entre éléments représentés ne sont pas respectées.

Le dispositif de mise en sécurité d'une cellule électrochimique selon l'invention a pour but de diminuer la charge de la cellule électrochimique peu après que celle-ci ne soit déconnectée de son environnement. En effet, en cas de dysfonctionnement, la violence de la réaction engendrée par l'augmentation de la température au sein de la cellule électrochimique de batterie métal-ion - appelée par la suite simplement cellule ou cellule électrochimique - dépend de la charge de ladite cellule. Plus la cellule est chargée, plus la réaction est violente.

La température de la cellule n'augmente pas de façon linéaire. La courbe d'augmentation standard de la température d'une cellule électrochimique comporte des points spécifiques qui peuvent être pris en compte pour déterminer la progression de la réaction. Un exemple d'une courbe d'évolution de la température au sein d'une cellule électrochimique est représenté sur la figure 2. Cette courbe montre que la température dans la cellule monte (phase a) jusqu'à un palier de température appelé amorce ou point d'amorce PA (ou « Onset » en termes anglo-saxons). Ce point d'amorce PA correspond à la température à partir de laquelle la cellule passe en mode exotherme, c'est-à-dire à partir de laquelle la cellule produit elle-même de la chaleur. Ce point d'amorce dépend de la chimie de la cellule et notamment des métaux et matériaux utilisés dans la cellule. Il peut être, par exemple, à 70°C ou 80°C pour certaines cellules électrochimiques de type Lithium-ion, comme montré sur la figure 2. Pendant la phase exotherme (phase b), la chaleur générée par les réactions de dégradation à l'intérieur de la cellule, conduit jusqu'à la vaporisation puis jusqu'à un événement irréversible appelé point de non-retour PNR (ou « Runaway » en termes anglo-saxons). Ce point de non-retour PNR est la température d'emballement thermique de la cellule. Dans l'exemple de la figure 2, le point de non-retour est à 120-130°C.

Les températures des points d'amorce et de non-retour varient en fonction de l'état de charge de la cellule considérée. Des exemples de courbes de températures sont représentées sur la figure 3 pour des cellules identiques mais avec des niveaux de charge différents. Les courbes D1, D2 et D3 représentent l'évolution de la température dans le temps, suivant l'état de charge des cellules. La courbe D1 correspond à une cellule totalement chargée (charge à 100%), la courbe D2 à une cellule chargée à 50% et la courbe D3 à une cellule totalement déchargée (charge à 0%). La courbe chargée à 100% (courbe D1) présente une évolution considérée comme normale, par exemple une évolution en escalier, jusqu'à environ 80°C. La courbe moyennement chargée (courbe D2) présente une évolution considérée comme normale, par exemple en escalier, jusqu'à presque 100°C et la courbe totalement déchargée (courbe D3) présente une évolution normale, par exemple en escalier, jusqu'à environ 120°C. Ces courbes montrent que moins la cellule est chargée, plus haute est la température correspondant au point d'amorce. Autrement dit, plus la cellule est déchargée et plus la cellule mettra du temps à atteindre son point d'amorce et donc la phase exotherme où elle produira elle-même de la chaleur. Ainsi, plus la cellule est déchargée et plus la température augmente lentement.

L'invention propose d'utiliser ces caractéristiques relatives à l'augmentation de la température des cellules pour mettre lesdites cellules en sécurité. Pour cela, elle propose un dispositif de mise en sécurité, monté dans chacune des cellules, pour transférer une partie au moins de la charge de la cellule vers une résistance de sécurité. Ce dispositif de mise en sécurité est monté à la place des dispositifs interrupteurs de l'art antérieur, entre le capot de fermeture de la cellule et l'électrode supérieure de la cellule, par exemple l'électrode positive.

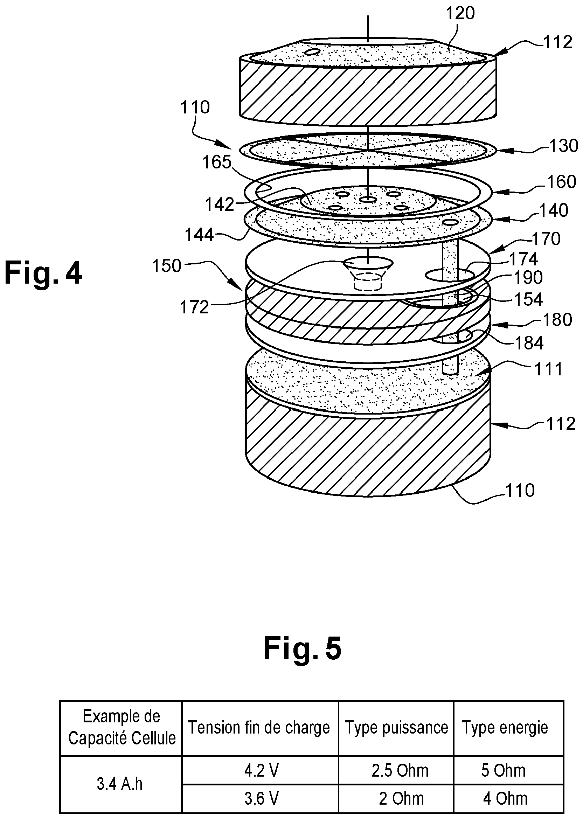

Un exemple de dispositif de mise en sécurité adapté pour des cellules électrochimiques de batterie métal-ion est représenté schématiquement sur la figure 4. Ce dispositif de mise en sécurité 100 comporte différents composants logés dans la partie supérieure de la cellule, entre le capot de fermeture 120 et l'électrode supérieure 111 de la cellule électrochimique 110. La cellule électrochimique 110 est une cellule classique qui comporte, comme toute cellule électrochimique, une enveloppe 112 dans laquelle sont logés une anode, une cathode et un électrolyte, non visibles sur la figure 4. L'enveloppe 112, par exemple portée à un potentiel négatif, est fermée, dans sa partie supérieure, par le capot de fermeture 120, par exemple à un potentiel positif.

Le dispositif de mise en sécurité 100 comporte plusieurs composants qui vont être décrits, par la suite, dans un exemple où la cellule est une cellule cylindrique. Il est à noter que le dispositif de mise en sécurité de l'invention peut être monté dans tout type de cellule électrochimique métal-ion, quelle que soit la forme de ladite cellule électrochimique. Il peut, en particulier, être monté au sein d'une cellule de type prismatique, de type souple, etc., les composants et leurs connexions les uns avec les autres étant identiques pour tous les types de cellules électrochimiques, seule la forme extérieure des composants pouvant varier.

Le dispositif de mise en sécurité 100 comporte un évent de surpression 130, un dispositif bilame 140 et une résistance de sécurité 150, montés dans cet ordre entre le capot de fermeture 120 et l'électrode supérieure 111 de la cellule. L'évent de surpression 130 est un évent de type classique, tel que celui décrit dans l'art antérieur et utilisé généralement dans les cellules électrochimiques à dispositif de sécurité passif. Il est fabriqué dans un matériau électriquement conducteur de sorte à assurer une liaison électrique entre le capot de fermeture 120 et l'électrode supérieure 111. Le matériau électriquement conducteur dans lequel est fabriqué l'évent peut être un métal comme, par exemple, de l'aluminium ou de l'acier. La pression de rupture de cet évent est déterminée par la surface exposée à la surpression et l'épaisseur du matériau utilisé. L'évent peut, par exemple, être une membrane présentant une zone de faiblesse, cette zone de faiblesse étant la zone de rupture. Dans l'exemple d'une cellule cylindrique, l'évent de surpression a la forme d'un disque sensiblement plan, monté parallèlement à l'électrode supérieure 111.

Le dispositif bilame 140, appelé aussi simplement bilame, est un composant métallique formé de deux lames de métaux ou d'alliages différents, dont la dilatation diffère l'une de l'autre. Les deux lames sont généralement soudées ou collées l'une contre l'autre, plan contre plan, de sorte à former un composant plan ou convexe à double épaisseur. La différence de dilatation de chacune des deux lames (chaque face du bilame) génère une déformation du bilame tout entier lorsque la température interne, c'est-à-dire la température qui règne au sein de la cellule électrochimique, varie. Le bilame s'active à des températures internes qui varient en fonction des matériaux choisis pour les deux lames. Par exemple, pour obtenir une activation, c'est-à-dire une déformation, du bilame à une température d'environ 90°C, l'une des lames formant le bilame peut être réalisée par exemple en Laiton et l'autre lame du bilame en invar (mélange de Fer et de Nickel). Les fabricants de bilames sélectionnent de façon très rigoureuse la composition, l'épaisseur, les profondeurs d'emboutissage et les traitements chimiques permettant une activation, c'est-à-dire un retournement, du bilame à une température précise, stable et répétitive.

Selon certains modes de réalisation, le bilame 140 est choisi de sorte que, une fois les deux lames collées ensemble, il soit de forme convexe. Pour cela, le bilame 140 peut comporter au moins une lame de forme convexe ; il peut également être associé à une feuille de tôle qui épouse la forme convexe du bilame et qui est emportée par le bilame lorsque celui-ci se retourne et prend une forme concave et qui reste ensuite dans sa forme concave. Le bilame 140, de par le choix de ses matériaux, est conducteur électrique. Ainsi, en fonctionnement normal (c'est-à-dire hors dysfonctionnement), le bilame 140 participe à la liaison électrique entre le capot de fermeture 120 et l'électrode supérieure 111. Par conséquent, tant que la température de déformation (c'est-à-dire la température permettant la déformation du bilame) n'est pas atteinte, le bilame 140 est connecté électriquement à l'évent de surpression 130. Dès que la température interne au sein de la cellule électrochimique atteint la température de déformation - appelée aussi température seuil - le bilame 140 se déforme et prend une forme concave. Cette déformation a pour effet de déconnecter le bilame 140 de l'évent de surpression 130 et donc de déconnecter la cellule de son environnement. Dans la variante où le bilame 140 est associé à une feuille de tôle, la feuille de tôle est positionnée entre le bilame 140 et la résistance de sécurité 150 de sorte à être en contact avec le bilame. Ainsi, le bilame, en se déformant sous l'effet de la température de déformation, emporte la tôle mais, quand la température redescend sous la température de déformation, le bilame retrouve sa forme initiale tout en laissant en place la feuille de tôle.

Le choix des matériaux employés pour la fabrication du bilame 140 dépend de la température à laquelle le bilame 140 se déforme et cette température de déformation est directement liée à la température au point d'amorce de la cellule électrochimique (appelée aussi température d'activation). Autrement dit, les lames du bilame 140 sont choisies en fonction de la température au point d'amorce (Onset) de la cellule électrochimique. Or, la température d'activation dépend de la densité d'énergie de la cellule électrochimique et de sa chimie. Il existe différentes familles de technologies des batteries métal-ion et notamment des batteries Lithium-ion. Chaque famille présente une densité d'énergie différente, avec un point d'amorce (ou Onset) différent, connu du fabricant ou déterminé par un essai de caractérisation nommé ARC, et dépendant notamment du procédé de fabrication et des matériaux choisis pour l'enveloppe, les électrodes, etc. Par exemple, pour une cellule de chimie C/NMC, où une des électrodes est en Graphite (C) et l'autre en Nickel Manganèse Cobalt (NMC), la densité d'énergie peut être comprise entre environ 200Wh/L et 600Wh/L et la température au point d'amorce varie entre environ 70°C et 120°C.

La température de déformation, ou température seuil, en fonction de laquelle sont choisis les matériaux du bilame, est déterminée pour qu'une utilisation normale, voire légèrement en dehors des limites de fonctionnement mais sans mettre la sécurité en danger, soit possible. Par exemple, elle peut être déterminée en ajoutant entre 10 et 30°C à la température d'activation définie pour une cellule électrochimique. Par exemple, pour une cellule de chimie de type graphite / NMC de 400Wh/L, le dispositif bilame sera choisi pour s'activer à 80°C et, pour une chimie de type graphite / LFP de 100Wh/L, le dispositif bilame sera choisi pour s'activer vers 100°C.

Quel que soit le bilame choisi, le bilame est de préférence percé afin d'assurer l'évacuation des gaz en cas de montée en pression. Il peut, par exemple, être percé de part en part, à mi-distance entre son centre et sa circonférence. Ce perçage permet au gaz généré dans la cellule électrochimique de traverser ladite cellule pour être évacué par l'évent de surpression. Dans le mode de réalisation où le bilame est associé à une feuille de tôle, la feuille de tôle peut également être percée pour permettre l'évacuation des gaz en cas de montée en pression. Le ou les perçages de la feuille de tôle peuvent, par exemple, être positionnés en regard du ou des perçages du bilame.

Selon un mode de réalisation, le dispositif de mise en sécurité 100 comporte, entre l'évent de surpression 130 et le bilame 140, un premier élément isolant 160 assurant une déconnexion complète du bilame 140 par rapport à l'évent de surpression lorsque la température de déformation est atteinte. Ce premier élément isolant 160 est une plaque isolante qui comporte un orifice 165 permettant le passage au moins du sommet de la partie convexe 142 du bilame 140. Dans l'exemple d'une cellule électrochimique cylindrique, le bilame 140 a sensiblement une forme de cloche, c'est-à-dire une forme de disque dont la partie externe 144 est plane et la partie centrale 142 est bombée et adaptée pour passer, selon la température interne, d'un bombé convexe à un bombé concave. Cette partie centrale bombée 142 peut comporter le ou les perçages assurant le passage des gaz vers l'évent de surpression. Dans cet exemple, le premier isolant 160 a une forme de disque dont le centre est ouvert ; il peut, par exemple, avoir une forme d'anneau positionné en regard de la partie externe 144 du bilame 140.

Le dispositif de mise en sécurité 100 comporte, en outre, une résistance de sécurité 150 positionnée entre le bilame 140 et l'électrode supérieure 111 de la cellule électrochimique et conçue pour permettre la décharge au moins partielle de la cellule électrochimique. En effet, en déchargeant la cellule dans la résistance de sécurité, les réactions de ladite cellule suite à un échauffement sont moins violentes et les risques d'explosion sont donc réduits.

Cette résistance de sécurité 150 peut être une résistance classique à base de céramique, portée à un potentiel négatif. Dans l'exemple d'une cellule électrochimique cylindrique, la résistance de sécurité 150 peut être un disque en céramique recouvert d'un alliage Chrome Nickel et Fer. Cette résistance de sécurité 150 permet de contrôler le courant de décharge I de la cellule électrochimique. De préférence, ce courant de décharge est maitrisé afin qu'il ne soit ni trop faible, car l'état de charge baisserait trop lentement pour être efficace, ni trop élevé, car une forte génération de chaleur n'aurait pas le temps d'être dissipée. Pour cela, la valeur de la résistance de sécurité 150 peut être définie en fonction de la capacité de la cellule et de sa densité de puissance.

Dans un mode de réalisation, la valeur R de la résistance de sécurité 150 est définie par la formule suivante :

$$[\text{Math. 1}] \qquad R = Ucharge / \left[ \left( \frac{c}{2} \right) * k \right],$$

où Ucharge est la tension électrique maximale de la cellule électrochimique, C est la capacité de la cellule électrochimique et k est un coefficient prédéfini dépendant du type de batterie. Les valeurs de la tension Ucharge et de la capacité C sont connues et données généralement par le fabricant. La tension Ucharge peut, par exemple, être de 4,2V pour une cellule électrochimique de chimie graphite / NMC ou de 3,6V pour une cellule électrochimique de chimie graphite / LFP. La capacité peut être, par exemple de 3,4A.h pour du NMC et 1,5A.h pour du LFP avec des tailles de cellules électrochimiques cylindriques standard « 18650 ». Le coefficient k est un coefficient dépendant du type de la batterie, c'est-à-dire de l'application prévue pour la batterie. Par exemple, une batterie peut être typée « énergie » lorsqu'elle est prévue pour un faible régime de décharge mais avec une durée relativement longue, comme par exemple une batterie de smartphone. Au contraire, une batterie peut être typée « puissance » lorsqu'elle est prévue pour un fort régime de décharge mais sur une durée relativement courte, comme par exemple une batterie de perceuse. Le coefficient k varie en fonction du type de batterie : il peut, par exemple, être égal à 1 pour une batterie typée puissance et égal à 2 pour une batterie typée énergie.

La figure 5 représente, dans un tableau, des exemples de données relatives à différentes cellules électrochimiques et utilisées pour déterminer la valeur en Ohms de la résistance de sécurité 150. Par exemple, pour une cellule de chimie graphite / NMC et dont la capacité est de 3,4A.h, la tension maximale de 4,2V et typée puissance, la résistance de sécurité aura une valeur R = 4,2/ [3,4/2 * 1] ≈ 2.5 Ohms. Pour une même cellule mais typée énergie, la résistance R sera d'environ 5 Ohms. Ainsi, pour une batterie typée énergie, la décharge sera plus lente que pour une batterie typée puissance, la quantité et la durée de décharge étant adaptées à la batterie afin de limiter la chaleur produite par la décharge elle-même.

Dans certains modes de réalisation, la résistance de sécurité « passive » telle qu'elle vient d'être décrite peut être remplacée par une résistance « active » à base de matériau à changement de phase, un tel matériau permettant de diminuer la résistance quand la température augmente. Par exemple, une résistance de sécurité active peut être fabriquée en utilisant un NTC (Negative Temperature Coefficient, en termes anglo-saxons) à base de matériaux semi-conducteurs dopés. Avec une telle résistance de sécurité active, il est possible d'augmenter la décharge au fur et à mesure de l'approche du point de non-retour.

Selon certains modes de réalisation, et comme représenté dans l'exemple de la figure 4, le dispositif de mise en sécurité 100 comporte une liaison électrique 190 connectant l'électrode supérieure 111 de la cellule électrochimique avec le capot de fermeture 120 par l'intermédiaire du dispositif bilame 140 et de l'évent de surpression 130. Cette liaison électrique 190, par exemple un fil électrique, est connectée d'une part à l'électrode supérieure 111 et d'autre part au bilame 140 pour assurer la liaison électrique entre ladite électrode supérieure et ledit bilame. Le bilame 140 étant connecté, en fonctionnement normal, à l'évent de surpression 130, lui-même connecté au capot de fermeture 120, l'électrode supérieure 111 est donc connectée au capot de fermeture 120.

Selon certains modes de réalisation, et comme représenté dans l'exemple de la figure 4, le dispositif de mise en sécurité 100 comporte un deuxième et un troisième éléments isolants, respectivement 170 et 180, montés de part et d'autre de la résistance de sécurité 150. Le troisième élément isolant 180 peut être une plaque isolante, par exemple de forme circulaire lorsque la cellule est cylindrique, positionnée entre la résistance 150 et l'électrode supérieure 111 et empêchant tout contact électrique entre la résistance 150 et l'électrode supérieure 111. Le deuxième élément isolant 170 peut être une plaque isolante, par exemple de forme circulaire lorsque la cellule est cylindrique, positionnée entre le bilame 140 et la résistance 150 et empêchant, en fonctionnement normal, tout contact électrique entre ledit bilame 140 et ladite résistance de sécurité 150. Ce deuxième élément isolant 170 peut comporter un premier orifice central 172, situé en regard de la zone centrale 142 du bilame 140, et permettant un contact électrique entre le bilame 140 et la résistance 150 lorsque ledit bilame a été activé, c'est-à-dire qu'il s'est déformé et a pris une forme concave. Ce deuxième élément isolant 170 permet, en fonctionnement normal de la cellule, que le bilame 140 soit isolé électriquement de la résistance de sécurité 150 et, en cas de dysfonctionnement de la cellule, que le bilame 140 soit connecté à la résistance de sécurité 150 par sa zone centrale 142. Ainsi, lorsque le bilame 140 est connecté à la résistance de sécurité 150, la charge dans la cellule 110 est transmise au moins en partie à la résistance de sécurité 150.

Dans le mode de réalisation où le bilame 140 est associé à une feuille de tôle, un quatrième élément isolant peut être monté entre le bilame et la feuille de tôle. Ce quatrième isolant peut, par exemple, avoir une forme et des dimensions identiques à ceux du premier élément isolant. En particulier, il peut avoir une forme d'anneau positionné en regard de la partie externe 144 du bilame 140.

Le dispositif bilame 140, la résistance de sécurité 150 et les éléments isolants 160, 170, 180 comportent des dimensions extérieures similaires de sorte à être empilables les uns sur les autres, entre le capot de fermeture et l'électrode supérieure de la cellule électrochimique.

Dans les modes de réalisation où une liaison électrique relie l'électrode supérieure 111 au bilame 140, chacun des deuxième et troisième éléments isolants 170, 180 comportent une lumière 174, 184 permettant le passage de la liaison électrique 190. Il en est de même pour la résistance de sécurité 150 qui comporte également une lumière 154. Les lumières 154, 174 et 184 sont situées en regard les unes des autres. Les lumières 154, 174 et 184 peuvent avoir des dimensions sensiblement identiques et adaptées aux dimensions de la liaison électrique 190 de façon à former un fourreau de passage pour la liaison électrique. Alternativement, la lumière 154 de la résistance 150 peut avoir des dimensions supérieures aux dimensions des lumières 174 et 184 des éléments isolants de sorte à permettre à la liaison électrique 190 de traverser la résistance de sécurité 150 sans risque d'être en contact avec ladite résistance.

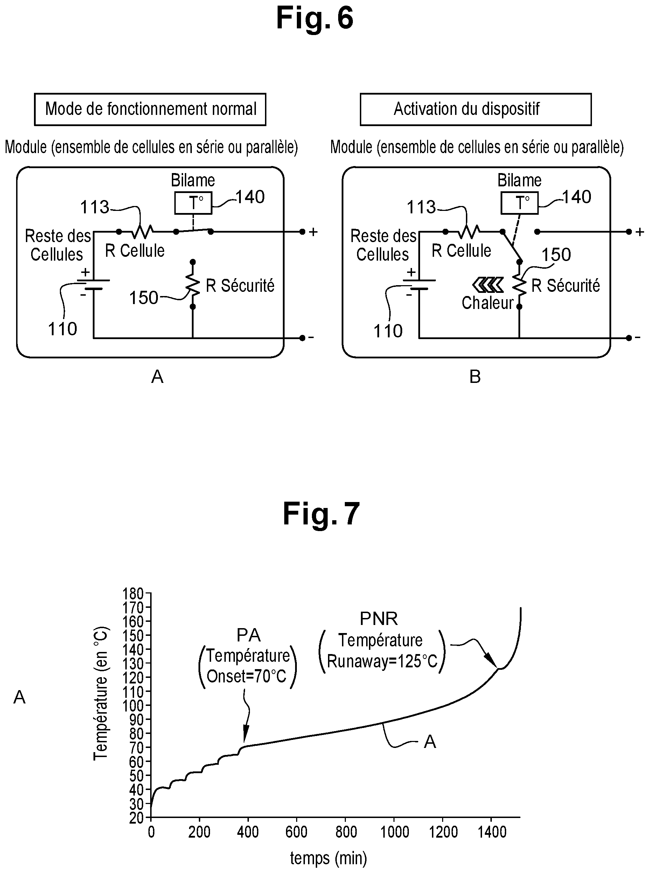

La figure 6 représente des schémas électriques correspondant au fonctionnement d'une cellule en mode normal (schéma A) et au fonctionnement d'une cellule en présence d'un dysfonctionnement (schéma B). En fonctionnement normal (schéma A), le bilame 140 conduit le courant électrique de l'électrode supérieure de la cellule 110 au capot de fermeture 120; la résistance 113 de la cellule est donc connectée à l'environnement; la résistance de sécurité 150 est déconnectée. En présence d'un dysfonctionnement, comme un fort courant ou un échauffement global, la température interne de la cellule augmente jusqu'à atteindre une température seuil prédéfinie, correspondant à la température de déformation du bilame 140. Le bilame 140 se déforme, se déconnecte de l'évent de surpression 120 et se connecte à la résistance de sécurité 150. La cellule électrochimique 110 est alors isolée électriquement de l'environnement (schéma B). L'électrode supérieure 111 (positive) de la cellule se décharge dans la résistance de sécurité 150 reliée à la borne négative, faisant baisser son état de charge et repoussant donc la température critique d'emballement thermique (ou Runaway). Le courant de décharge I est défini par :

$$[\text{Math. 2}] \quad I(t)\,\text{décharge} = U(t)\,\text{Cell} / (R\,\text{Cell} + R\,\text{Sécurité}),$$

où U Cell est la tension dans la cellule, R Cell est la résistance interne de la cellule et R Sécurité est la valeur de la résistance de sécurité 150.

La résistance de sécurité 150, judicieusement choisie, s'échauffe et dissipe ses calories dans l'environnement, par exemple dans l'air ou par conduction vers les cellules voisines dans le cas d'un montage électrique en série ou parallèle. Quand la charge de la cellule atteint 0V, celle-ci ne présente plus aucun danger d'emballement. Le reste du module, c'est-à-dire les autres cellules du module de la batterie, peut rester fonctionnel, notamment lorsque le montage est de type parallèle.

Les figures 7, 8 et 9 représentent des courbes A, B et C issues d'une expérimentation et montrant la température d'une cellule électrochimique lithium-ion, de chimie graphite / LCO, de tension électrique maximum 4.2V, de capacité 1A.h et typée puissance, en fonctionnement normal et en cas de dysfonctionnement sans dispositif de mise en sécurité et avec un dispositif de mise en sécurité. En particulier, la courbe A de la figure 7 montre l'évolution thermique de cette cellule électrochimique lors d'un essai de caractérisation ARC. Cette courbe A permet de déterminer que le point d'amorce PA (ou Onset) de la cellule est à 70°C et que son point de non-retour PNR est à 125°C.

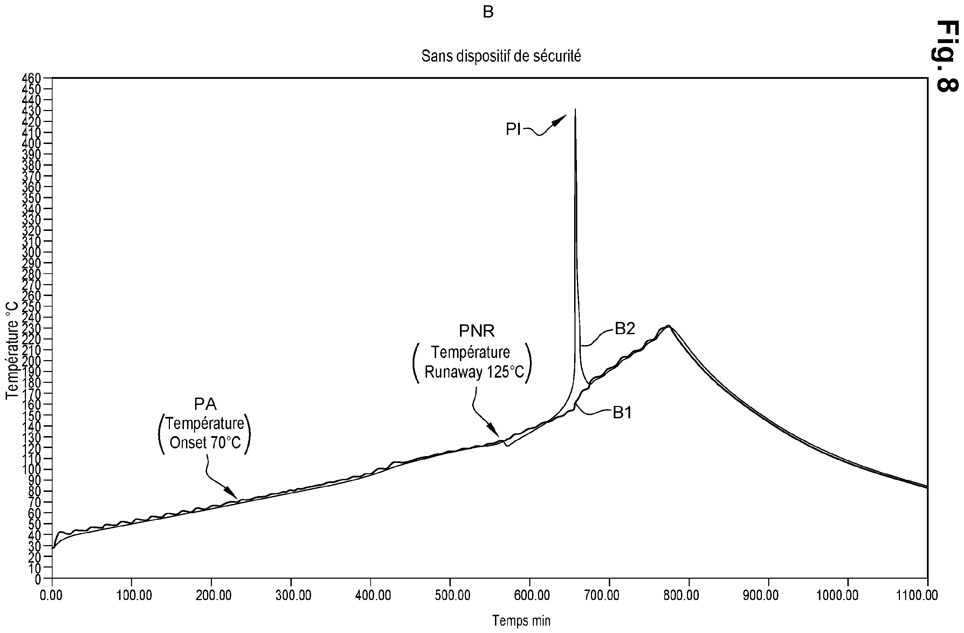

Le schéma B de la figure 8 montre l'effet d'une élévation de température sur cette cellule lorsque cette dernière est classique et ne comporte pas de dispositif de mise en sécurité. La courbe B1 représente l'évolution de la température de l'environnement ; la courbe B2 représente l'évolution de la température au sein de la cellule. On voit que les courbes B1 et B2 se suivent jusqu'au point de non-retour PNR, mais qu'à partir de ce point PNR (soit environ 125°C), la cellule s'enflamme (courbe B2) et la température augmente quasiment à la verticale jusqu'à l'inflammation ou l'explosion de la cellule (point PI).

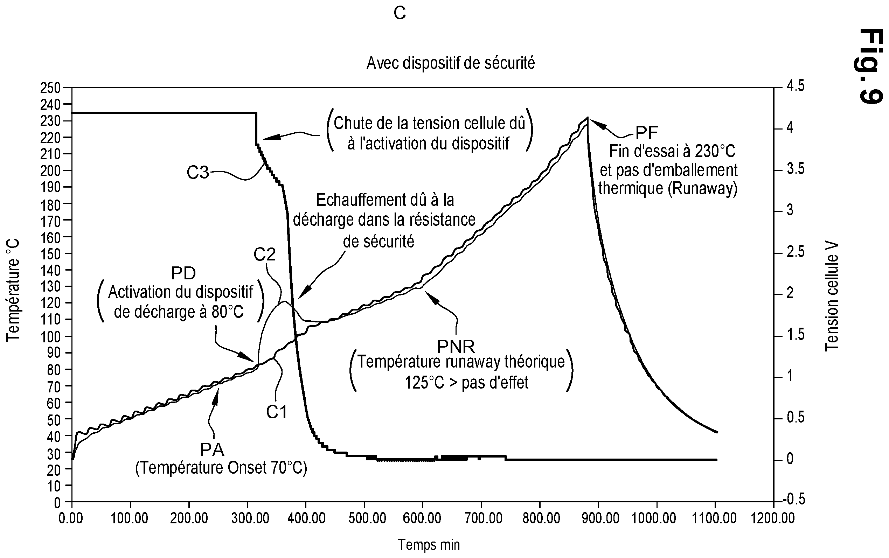

Le schéma C de la figure 9 montre l'effet d'une élévation de température sur cette même cellule lorsque celle-ci est conforme à l'invention et comporte un dispositif de mise en sécurité. La température au point d'amorce PA ayant été déterminée à 70°C par lecture de la courbe A, il a été choisi d'activer le bilame du dispositif de mise en sécurité à 80°C, soit 10° au-dessus de la température d'activation. La valeur de la résistance de sécurité a été calculée à 4 Ohms au moyen de la formule [math. 1] donnée précédemment. Sur le schéma C, la courbe C1 représente l'évolution de la température de l'environnement ; la courbe C2 représente l'évolution de la température au sein de la cellule ; la courbe C3 représente l'évolution de la tension de la cellule. On voit que les courbes C1 et C2 se suivent jusqu'au-delà du point d'amorce PA, et notamment jusqu'à la température de 80°C correspondant à la température de déformation du bilame (point PD). A cette température de déformation, la courbe C3 descend rapidement, ce front descendant correspondant à la chute de la tension de la cellule due à l'activation du dispositif de mise en sécurité. Simultanément à la baisse de la courbe C3, la courbe C2 augmente et s'écarte de la courbe C1 car la cellule s'échauffe à cause de la décharge dans la résistance de sécurité. A la fin de la baisse de la tension (courbe C3), la courbe C2 suit à nouveau la courbe C1 jusqu'à la fin de l'expérimentation (point PF). On voit donc qu'il n'y a pas eu de décrochement de la courbe C2 par rapport à la courbe C1, ce qui montre qu'il n'y a pas eu d'inflammation ou d'emballement thermique de la cellule au point de non-retour PNR, ni après. A la fin de l'expérimentation, non seulement la cellule est déconnectée de son environnement, mais en plus elle ne présente plus aucun risque d'inflammation ou d'explosion.

Ainsi, comme expliqué précédemment, le dispositif de mise en sécurité permet de déconnecter la cellule en dysfonctionnement de son environnement et notamment des autres cellules d'un même module de batterie. Elle permet également de décharger la cellule en dysfonctionnement dans une résistance de sécurité adaptée afin de limiter ou éviter les risques d'emballement thermique pouvant conduire à une inflammation ou une explosion de ladite cellule.

Bien que décrit à travers un certain nombre d'exemples, variantes et modes de réalisation, le dispositif de mise en sécurité selon l'invention comprend divers variantes, modifications et perfectionnements qui apparaîtront de façon évidente à l'homme du métier, étant entendu que ces variantes, modifications et perfectionnements font partie de la portée de l'invention.

**Revendications**

1. Dispositif de mise en sécurité (100) d'une cellule électrochimique (110) de batterie, comportant un évent de surpression (130) logé entre un capot de fermeture (120) et une électrode supérieure (111) de la cellule électrochimique et assurant une évacuation de gaz en cas de dysfonctionnement de ladite cellule électrochimique, **caractérisé en ce qu'**il comporte en outre :

   - un dispositif bilame (140) apte à s'activer lorsqu'une température interne atteint une température seuil prédéfinie, et
   - une résistance de sécurité (150), positionnée entre le dispositif bilame et l'électrode supérieure de la cellule électrochimique,

   le dispositif bilame (140) étant positionné entre l'évent de surpression (130) et la résistance de sécurité (150) de sorte à être connecté à l'évent de surpression lorsque la température interne est inférieure à la température seuil et à se connecter à la résistance de sécurité lorsque la température interne atteint la température seuil.

**2.** Dispositif de mise en sécurité selon la revendication 1, **caractérisé en ce qu'**il comporte un premier élément isolant (160) monté entre le dispositif bilame (140) et l'évent de surpression (130) et un deuxième élément isolant (170) monté entre le dispositif bilame et la résistance de sécurité, chacun des éléments isolants comportant un orifice (165, 172) en regard d'une zone de déformation (142) du dispositif bilame.

**3.** Dispositif de mise en sécurité selon l'une quelconque des revendications 1 à 2, **caractérisé en ce qu'**il comporte un troisième élément isolant (180) monté entre l'électrode supérieure de la cellule électrochimique et la résistance de sécurité.

**4.** Dispositif de mise en sécurité selon l'une quelconque des revendications 2 à 3, **caractérisé en ce que** le dispositif bilame (140), la résistance de sécurité (150) et les éléments isolants (160, 170, 180) comportent des dimensions extérieures similaires et sont empilés les uns sur les autres entre le capot de fermeture (120) et l'électrode supérieure (111) de la cellule électrochimique.

**5.** Dispositif de mise en sécurité selon l'une quelconque des revendications 1 à 4, **caractérisé en ce que** le dispositif bilame (140) comporte deux lames de matériaux à coefficients de dilatation différents, en contact avec une feuille de tôle présentant une forme bombée.

**6.** Dispositif de mise en sécurité selon l'une quelconque des revendications 1 à 5, **caractérisé en ce qu'**il comporte une liaison électrique (190) connectant l'électrode supérieure de la cellule électrochimique avec le capot de fermeture par l'intermédiaire du dispositif bilame et de l'évent de surpression.

**7.** Dispositif de mise en sécurité selon les revendications 2, 3 et 6, **caractérisé en ce que** chacun des deuxième et troisième éléments isolants (170, 180) comportent une lumière (174, 184) traversée par la liaison électrique (190).

**8.** Dispositif de mise en sécurité selon l'une quelconque des revendications 1 à 7, **caractérisé en ce que** la température seuil est définie en fonction d'une température d'activation de la cellule électrochimique (110), cette température d'activation étant la température à laquelle la cellule électrochimique passe en mode exotherme.

**9.** Dispositif de mise en sécurité selon la revendication 8, **caractérisé en ce que** la température seuil est définie comme étant la température d'activation de la cellule électrochimique augmentée de 10 à 30°C.

**10.** Dispositif de mise en sécurité selon l'une quelconque des revendications 1 à 9, **caractérisé en ce qu'**une valeur de la résistance de sécurité est définie par la formule $R = Ucharge/[\left(\frac{C}{2}\right)*k]$, où Ucharge est la tension électrique maximale de la cellule électrochimique, C est la capacité de la cellule électrochimique et k est un coefficient prédéfini dépendant du type de batterie.

**11.** Dispositif de mise en sécurité selon l'une quelconque des revendications 1 à 10, dans lequel la cellule électrochimique (110) est de type cylindrique, **caractérisé en ce que** le dispositif bilame est de forme circulaire avec une zone de déformation centrale (142).

**12.** Dispositif de mise en sécurité selon la revendication 11, **caractérisé en ce que** la résistance de sécurité (150) est un disque en céramique recouvert d'un alliage chrome nickel et fer.

**13.** Cellule électrochimique de batterie, **caractérisée en ce qu'**elle comporte un dispositif de mise en sécurité (100) selon l'une quelconque des revendications 1 à 12.

**14.** Batterie métal-ion comportant une pluralité de cellules électrochimiques, **caractérisée en ce que** chaque cellule électrochimique comporte un dispositif de mise en sécurité (100) selon l'une quelconque des revendications 1 à 12.

# Fig. 1

A          B          C

# Fig. 2

# Fig. 3

**Fig. 4**

**Fig. 5**

| Example de Capacité Cellule | Tension fin de charge | Type puissance | Type energie |
|---|---|---|---|
| 3.4 A.h | 4.2 V | 2.5 Ohm | 5 Ohm |
|  | 3.6 V | 2 Ohm | 4 Ohm |

# Fig. 6

Mode de fonctionnement normal

Module (ensemble de cellules en série ou parallèle)

Bilame

113

Reste des Cellules

R Cellule

R Sécurité

110

150

140

A

Activation du dispositif

Module (ensemble de cellules en série ou parallèle)

Bilame

113

Reste des Cellules

R Cellule

Chaleur

R Sécurité

150

140

110

B

# Fig. 7

Température (en °C)

PA
(Température
Onset=70°C)

PNR
Température
Runaway=125°C

A

temps (min)

A

## Fig. 8

C

Avec dispositif de sécurité

**Fig. 9**

EP 3 826 099 A1

Chute de la tension cellule dû
à l'activation du dispositif

C3

PF
Fin d'essai à 230°C
et pas d'emballement
thermique (Runaway)

Echauffement dû à la
décharge dans la résistance
de sécurité

C2

PD
Activation du dispositif
de décharge à 80°C

PNR
Température runaway théorique
125°C > pas d'effet

C1

PA
(Température Onset 70°C)

Température °C

Tension cellule V

Temps min

Europäisches
Patentamt

European
Patent Office

Office européen
des brevets

**RAPPORT DE RECHERCHE EUROPEENNE**

Numéro de la demande

EP 20 20 8696

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2006/275653 A1 (CHANG SUNG K [KR] ET AL) 7 décembre 2006 (2006-12-07) * le document en entier * ----- | 1-5,8-14 | INV. H01M10/44 H01M50/342 H01M50/572 |
| X | KR 2010 0005945 A (LG CHEMICAL LTD [KR]) 18 janvier 2010 (2010-01-18) * abrégé * ----- | 1-5,8-14 | |
| X | JP 2008 041393 A (NEC TOKIN CORP) 21 février 2008 (2008-02-21) * abrégé * ----- | 1-5,8-14 | |
| X | JP 2007 128818 A (NEC TOKIN CORP) 24 mai 2007 (2007-05-24) * abrégé * ----- | 1-5,8-14 | |

DOMAINES TECHNIQUES
RECHERCHES (IPC)

H01M

Le présent rapport a été établi pour toutes les revendications

| Lieu de la recherche | Date d'achèvement de la recherche | Examinateur |
|---|---|---|
| Munich | 6 avril 2021 | Koessler, Jean-Luc |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
.................................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 20 20 8696

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-04-2021

| Document brevet cité au rapport de recherche | Date de publication | Membre(s) de la famille de brevet(s) | Date de publication |
|---|---|---|---|
| US 2006275653 A1 | 07-12-2006 | CN 101171704 A | 30-04-2008 |
| | | JP 5372495 B2 | 18-12-2013 |
| | | JP 5723925 B2 | 27-05-2015 |
| | | JP 2008541374 A | 20-11-2008 |
| | | JP 2013239442 A | 28-11-2013 |
| | | KR 20060116723 A | 15-11-2006 |
| | | TW 200707876 A | 16-02-2007 |
| | | US 2006275653 A1 | 07-12-2006 |
| | | WO 2006121290 A1 | 16-11-2006 |
| KR 20100005945 A | 18-01-2010 | AUCUN | |
| JP 2008041393 A | 21-02-2008 | AUCUN | |
| JP 2007128818 A | 24-05-2007 | JP 4909569 B2 | 04-04-2012 |
| | | JP 2007128818 A | 24-05-2007 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CN 105895835